# DEMANDE DE BREVET EUROPEEN

(11) **EP 4 813 751 A1**
(43) Date de publication de la demande: **30.09.2026**
(21) Numéro de dépôt: 26168468.2
(22) Date de dépôt: 27.03.2026
(51) Int. Cl.: B60R 3/00

(54) **VÉHICULE AUTOMOBILE COMPRENANT UNE PORTE BATTANTE ARRIÈRE ET UNE ÉCHELLE EXTÉRIEURE**

(30) Priorité: 28.03.2025 FR 2503251
(71) Demandeur: Flexis, 92100 Boulogne Billancourt (FR)
(72) Inventeur: CHAUMEIL, Romain, 78640 VILLIERS SAINT-FREDERIC (FR); ANGLADE, Cédric, 78640 VILLIERS SAINT-FREDERIC (FR); MOGNER, Regis, 78640 VILLIERS SAINT-FREDERIC (FR)
(74) Mandataire: Lavoix

(57) **Abrégé**

La présente invention concerne un véhicule automobile (2) comprenant une porte battante arrière (4), un toit (6), une galerie (8) et une échelle (10) comportant deux montants (12) et des barreaux (120). L'échelle (10) comporte également deux portions supérieures (14) s'étendant au-dessus d'une partie de la galerie (8). Au moins une des portions supérieures (14) comporte au moins un pied (16) orienté en direction de la galerie (8). Le pied (16) comporte un pion coulissant (160) qui coulisse entre une première position de repos et une deuxième position de verrouillage. La galerie (8) comporte au moins une encoche (18) alignée avec le pion coulissant (160). Lorsque la porte battante arrière est en configuration fermée, le pion coulissant (160) est décalé de la galerie (8) dans sa première position de repos et le pion coulissant est engagé dans l'encoche (18) dans sa deuxième position de verrouillage.

## Description

La présente invention concerne un véhicule automobile comprenant, entre autres, une porte battante arrière ainsi qu'une échelle disposée sur l'extérieur du véhicule au niveau de la porte battante arrière.

Le domaine technique de l'invention est celui des véhicules automobiles équipés d'une échelle extérieure.

Dans ce domaine, il est connu de US12024949B2 et de US12145537B2 de fixer l'échelle directement sur la porte battante arrière du véhicule, notamment pour ne pas empêcher l'ouverture de la porte battante arrière. Lorsqu'un utilisateur prend appui sur une échelle fixée sur la porte battante arrière, des efforts importants sont appliqués sur la porte et notamment sur la partie supérieure de celle-ci, parfois dénommée « serti de porte ». La partie supérieure de la porte est légère et peu résistante mécaniquement. Ainsi, au fur et à mesure de l'utilisation de l'échelle, la partie supérieure de la porte tend à se déformer et à se dégrader.

D'autre part, il est connu de US11981289B2 et de US2022/0136326A1 de disposer l'échelle sur un côté d'un véhicule. Dans ce cas, l'échelle augmente l'encombrement latéral du véhicule, sauf si elle est rabattue sur le toit, ce qui nécessite des manœuvres récurrentes et pénibles.

C'est à ces inconvénients qu'entend plus particulièrement remédier l'invention en proposant un véhicule automobile dans lequel l'échelle est efficacement disposée au niveau de la porte battante arrière sans risque de détérioration de la partie supérieure de cette porte.

A cet effet, l'invention a pour objet un véhicule automobile comprenant une porte battante arrière mobile entre une position fermée où elle ferme l'accès à un volume intérieur du véhicule et une position ouverte où elle donne accès au volume intérieur ; un toit ; une galerie montée sur le toit ; une échelle comportant deux montants, parallèles entre eux et fixés sur la porte battante arrière, et des barreaux reliant entre eux les deux montants.

Conformément à l'invention l'échelle comporte également deux portions supérieures s'étendant, à partir du haut des montants, au-dessus d'une partie de la galerie ; au moins une des portions supérieures comporte au moins un pied orienté vers le bas, en direction de la galerie ; le pied comporte un pion coulissant qui coulisse, selon un axe longitudinal du pied, entre une première position de repos et une deuxième position de verrouillage ; la galerie comporte au moins une encoche alignée avec le pion coulissant selon une direction parallèle à la direction de coulissement, lorsque la porte battante arrière est en configuration fermée ; lorsque le pion coulissant est dans sa première position de repos et lorsque la porte battante arrière est en configuration fermée, le pion coulissant est décalé de la galerie, selon une direction de l'axe longitudinal ; lorsque le pion coulissant est dans sa deuxième position de verrouillage et lorsque la porte battante arrière est en configuration fermée, le pion coulissant est engagé dans l'encoche.

Grâce à l'invention, un utilisateur peut manuellement faire coulisser chaque pion coulissant vers sa première position de verrouillage pour l'insérer dans l'encoche correspondante de la galerie. L'échelle est ainsi verrouillée avant son utilisation de l'échelle par une personne qui grimpe sur les barreaux. Lorsque l'utilisateur prend appui sur l'échelle, les pieds des portions supérieures de l'échelle prennent appui sur la galerie. Ainsi, la galerie récupère une partie des efforts normalement appliqués à la partie supérieure de la porte battante arrière. Cette dernière se déforme donc moins au fur et à mesure des utilisations de l'échelle.

Au terme de l'utilisation de l'échelle, l'utilisateur peut manuellement faire coulisser chaque pion coulissant de sa deuxième position de verrouillage vers sa première position de repos. Les deux portions supérieures de l'échelle sont alors disposées au-dessus de la galerie et aucun pion coulissant n'est inséré dans une encoche. Ainsi, il est possible d'ouvrir ou de fermer le battant secondaire de la porte battante arrière.

Selon des aspects avantageux mais non obligatoires de l'invention, un véhicule automobile peut incorporer une ou plusieurs des caractéristiques suivantes, prises dans toute combinaison techniquement admissible :
- Le pied comporte en outre une partie tubulaire, fixe par rapport à la partie supérieure, et dans lequel le pion coulissant est monté à l'intérieur de la partie tubulaire.
- La partie tubulaire comporte une encoche ménagée à travers une surface latérale et le pion coulissant comporte une protubérance orientée perpendiculairement à l'axe longitudinal et disposé au travers de l'encoche.
- La protubérance est configurée pour passer d'une position bloquante à une position passante par le coulissement manuel de la protubérance dans l'encoche, et dans lequel la partie coulissante coulisse selon la première direction de l'axe longitudinal lorsque la protubérance est dans sa position passante, et est bloquée en translation selon la première direction de l'axe longitudinal au niveau de la protubérance, lorsque la protubérance est dans sa position bloquante.
- La protubérance passe de sa position bloquante à sa position passante par rotation du pion coulissant autour de l'axe longitudinal.
- Le pion coulissant comprend un cylindre principal et un cylindre secondaire, disposé à une extrémité inférieure du cylindre principal, et dans lequel un diamètre du cylindre secondaire est strictement inférieur à un diamètre du cylindre principal.
- Chaque portion supérieure de l'échelle comporte au moins un pion, les portions supérieures comportant, de préférence, le même nombre de pions.
- Les deux portions supérieures de l'échelle sont parallèles entre elles et les pions sont parallèles ou quasi-parallèles entre eux.
- L'échelle est montée sur un battant secondaire de la porte et verrouille ce battant secondaire en position fermée, lorsque la partie coulissante est dans sa deuxième position.
- La galerie comporte des barres transversales et chaque encoche est disposée sur la barre transversale la plus proche de l'arrière du véhicule.

L'invention sera mieux comprise à la lecture de la description qui va suivre d'un mode de réalisation d'un véhicule automobile conforme à son principe, donnée uniquement à titre d'exemple et faite en référence aux dessins annexés dans lesquels :
[Fig. 1] la figure 1 est une vue en perspective arrière par le dessus d'un véhicule automobile conforme à l'invention.
[Fig. 2] la figure 2 inclut deux vues en perspective d'un sous-ensemble du véhicule de la figure 1 comprenant deux portions supérieures d'une échelle et une barre transversale d'une galerie, chaque portion supérieure comprend un pied et un des pieds comprend un pion coulissant en position de repos sur l'insert A) et en position de verrouillage sur l'insert B).
[Fig.3] la figure 3 inclut deux vues en perspective du sous-ensemble de la figure 2, selon un autre angle, le pion coulissant étant en position de repos sur l'insert A) et en position de verrouillage sur l'insert B).
[Fig. 4] la figure 4 inclut deux vues en perspective d'un pied comprenant un pion coulissant en position de repos sur l'insert A) et en position de verrouillage sur l'insert B).

Le véhicule 2 représenté sur les figures comprend, entre autres, une porte battante arrière 4, un toit 6, une galerie 8 et une échelle 10.

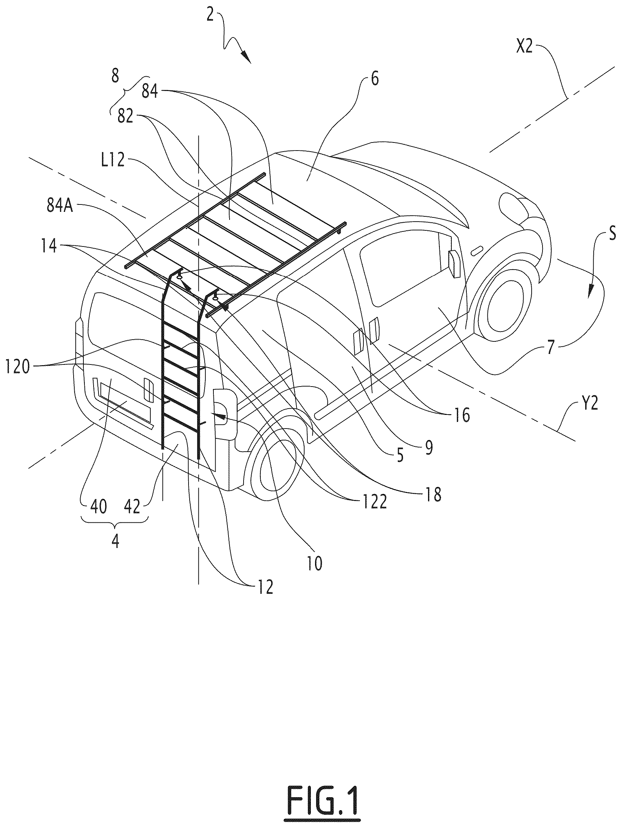

Le véhicule 2 comprend également une caisse 5, à laquelle appartient le toit 6, ainsi que des portes avant, dont une seule est visible à la figure 1 avec la référence 7, et une porte latérale 9.

On considère une position nominale du véhicule 2, dans laquelle celui-ci repose sur une surface du sol S plane et horizontale. C'est dans cette position que sont définies des directions horizontale et verticale pour le véhicule 2.

La porte battante arrière 4 est composée d'un battant principal 40 comportant une poignée et d'un battant secondaire 42 ne comportant pas de poignée. Ces battant sont articulés sur la caisse 5 autour d'axes verticaux et parallèles entre eux. Typiquement, lors d'une manœuvre de la porte battante arrière 4, la battant principal 40 est ouvert en premier, pour permettre l'ouverture du battant secondaire 42, et fermé en dernier, pour permettre la fermeture du battant secondaire 42.

La galerie 8 est disposée à l'extérieur du véhicule 2 à l'horizontale sur le toit 6 et comporte des barres longitudinales 82, parallèles à un axe longitudinal avant-arrière X2 du véhicule, et des barres transversales 84, parallèles à un axe transversal Y2 du véhicule et perpendiculaires aux barres longitudinales 82. On note 84A la barre transversale arrière, située la plus en arrière, au sein de la galerie 8.

L'échelle 10 est disposée à l'extérieur du véhicule 2 à la verticale, au niveau du battant secondaire 42 de la porte battante arrière 4.

L'échelle 10 comporte deux montants verticaux 12, parallèles entre eux et fixés sur le battant secondaire 42 de la porte battante arrière 4. Typiquement, les deux montants 12 comportent des pattes 120 horizontales disposées du côté des deux montants faisant face au battant secondaire 42 de la porte battante arrière 4.

De préférence, les pattes 120 sont immobilisées sur le battant secondaire 42 par des moyens mécaniques irréversibles, tels que des points de soudure. Ainsi, les deux montants 12 et le battant secondaire 42 de la porte battante arrière 4 forment un sous-ensemble rigide et indémontable.

Dans l'exemple de la figure 1, les montants 12 comportent au total quatre pattes 120. Cependant, ce nombre n'est pas limitatif, le nombre de pattes 120 de chaque montant 12 pouvant varier selon les besoins.

On note L12 un axe longitudinal de l'un des montants 12. Les axes L12 des deux montants sont parallèles.

Dans l'exemple des figures, les axes longitudinaux L12 sont verticaux et parallèles aux axes d'articulation des battants 40 et 42 sur la caisse 5. En variante, chaque axe L12 peut être quasi vertical et décalé angulairement par rapport à la verticale, d'un angle inférieur à 10°.

L'échelle 10 comporte également des barreaux 122, perpendiculaires aux montants 12, horizontaux en configuration nominale d'utilisation du véhicule et qui relient entre eux les deux montants 12. Les barreaux 122 peuvent également être dénommés échelons ou marches.

L'échelle 10 comprend en outre deux portions supérieures 14. Les deux portions supérieures 14 sont des extensions des deux montants 12 en haut de ces-derniers. De préférence, les deux portions supérieures 14 sont fabriquées dans le même matériau que les deux montants 12 et monoblocs avec ceux-ci.

De préférence, les deux portions supérieures 14 sont parallèles ou quasi-parallèles entre elles. Par quasi-parallèles, on entend qu'elles forment entre elles un angle inférieur à 10°, en vue de dessus.

Au moins une partie distale 14A de chaque portion supérieure 14 est disposée au-dessus d'au moins une partie de la galerie 8, en étant parallèle à la galerie 8. Les parties distales 14A sont horizontales ou quasi-horizontales.

Les deux portions supérieures 14 comportent sur leur partie distale des pieds 16 orientés vers le sol, en direction de la galerie 8.

Les pieds 16 sont tous parallèles entre eux et on note L16 un axe longitudinal de l'un des pieds. L'axe L16 des pieds est parallèle à l'axe longitudinal L12 des montants verticaux 12 ou décalé angulairement par rapport à l'axe L12, d'un angle inférieur à 10°.

Avantageusement, les pieds 16 sont en nombre supérieur ou égal à deux et chaque portion supérieure 14 comporte au moins un pied 16. De préférence, chaque portion supérieure 14 comporte le même nombre de pieds 16.

Optionnellement, les pieds 16 des portions supérieures 14 disposés au-dessus de la galerie 8 sont légèrement décalées verticalement de la galerie 8 par un jeu J, lorsque l'échelle 10 est au repos.

Lors de l'utilisation de l'échelle 10, notamment lorsqu'un utilisateur prend appui sur les barreaux 122, l'échelle s'affaisse légèrement et au moins un pied 16 d'une portion supérieure 14 vient en appui vertical sur la galerie 8. Ainsi, une partie des efforts, notamment du poids, exercés lors de l'utilisation de l'échelle 10 est appliquée sur la galerie 8. Ceci induit une meilleure répartition des efforts limitant, notamment, une dégradation de la partie supérieure de la porte battante arrière 4.

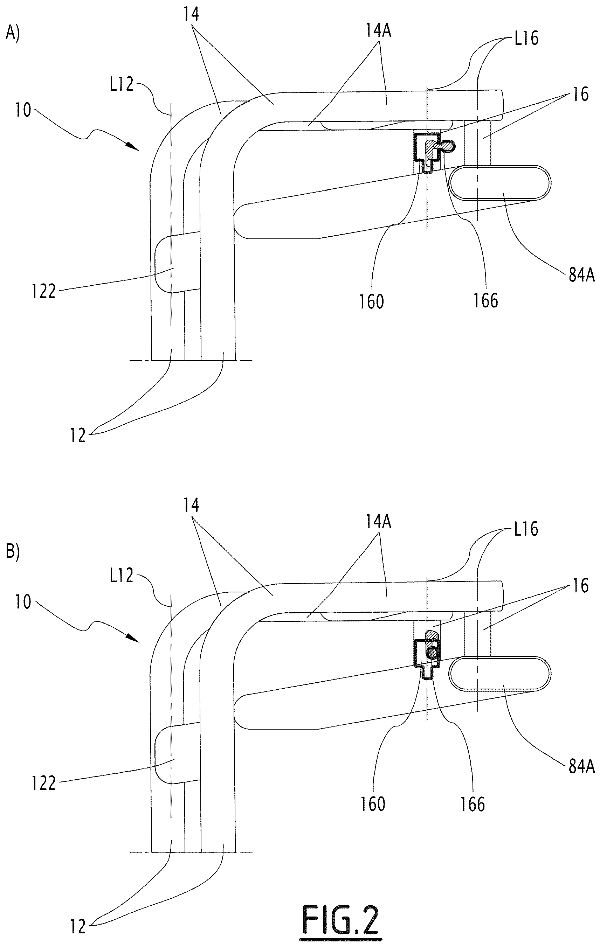

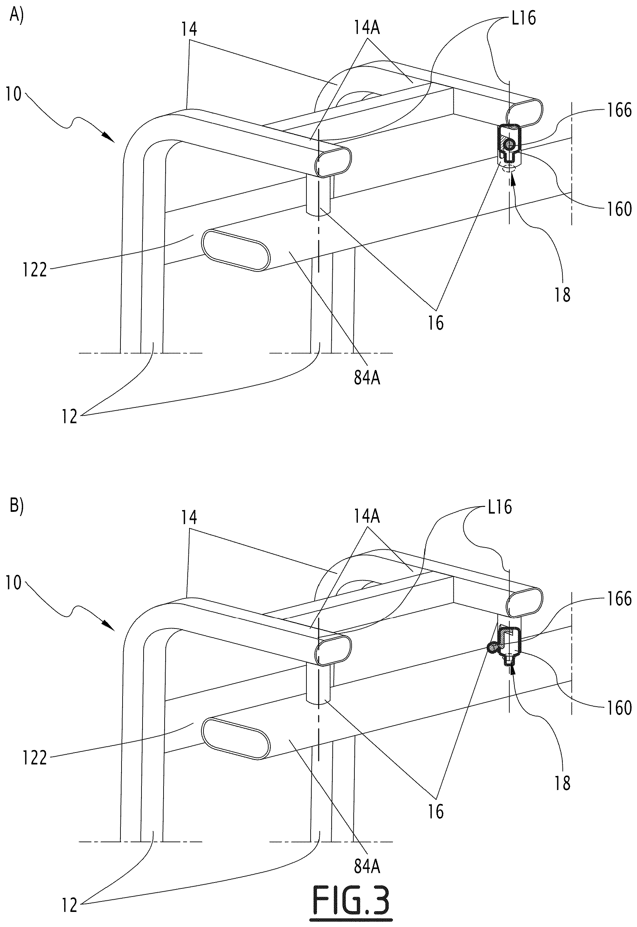

Au moins un pied 16 comporte un pion coulissant 160. De préférence, chaque pied 16 comporte un pion coulissant 160. Sur les figures 2 et 3, seul un pion coulissant 160 est représenté, par transparence de l'un des pieds 16, mais l'autre pied 16 inclut également un pion coulissant 160.

Avantageusement et comme représenté pour un des deux pieds 16 sur les figures 2 à 4, chaque pied 16 comporte, en outre, une partie tubulaire 162 et le pion coulissant 160 de chaque pied 16 est monté à l'intérieur de la partie tubulaire 162 du pied.

De préférence, chaque pion coulissant comporte un cylindre principal 168 et un cylindre secondaire 170 en contact vertical avec le cylindre principal 168 au niveau de son extrémité inférieure 168A. Le cylindre principal 168 et le cylindre secondaire 170 sont alignés sur l'axe des pieds L16. Le cylindre secondaire 170 est de diamètre d170 strictement inférieur au diamètre d168 du cylindre principal 168.

Avantageusement, la partie tubulaire 162 d'un pied 16 comporte en outre une encoche de guidage 164 ménagée à travers une surface latérale S162 et le pion coulissant 160 du pied 16 comporte une protubérance 166 disposée sur une face latérale S168 du cylindre principal 168 orientée perpendiculairement à l'axe L16 et disposée au travers de l'encoche de guidage 164.

De préférence, le pion coulissant 160 est monobloc ; en d'autres termes, les cylindres 168 et 170 forment une seule pièce.

Avantageusement, l'encoche de guidage 164 comporte un chemin radial 164R horizontal ou décalé angulairement par rapport à l'horizontale, d'un angle inférieur à 10°, et un chemin longitudinal 164L parallèle à l'axe L16 du pied 16.

La protubérance 166 coulisse dans l'encoche de guidage 164 par actionnement manuel d'un utilisateur. La protubérance 166 coulisse suivant le chemin radial 164R et fait tourner le cylindre principal 168 et le cylindre secondaire 170 autour de l'axe L16. La protubérance 166 coulisse également suivant le chemin longitudinal 164L et fait translater le pion coulissant 160 selon l'axe L16.

Lorsque la protubérance 166 est dans le chemin radial 164R, la protubérance 166 est dans une première position bloquante, dans laquelle le pion coulissant 160 est bloqué en translation selon l'axe L16 au niveau de la protubérance 166. Le pion coulissant 160 est alors dans une première position, dite de repos, où il est décalé de la galerie 8, selon une direction parallèle à l'axe longitudinal L16. En particulier, dans la position de repos, le pion coulissant ne pénètre pas à l'intérieur de l'encoche 18 qui est disposée en face de lui sur la barre transversale arrière 84A.

Lorsque la protubérance coulisse suivant le chemin radial 164R pour atteindre le chemin longitudinal 164L par actionnement manuel d'un utilisateur, la protubérance 166 passe dans une deuxième position passante, dans laquelle le pion coulissant 160 coulisse selon l'axe L16 vers le bas, en direction de la galerie 8. Le pion coulissant atteint alors une deuxième position, dite de verrouillage.

Lorsque la protubérance 166 est dans le chemin longitudinal 164L, le pion coulissant est bloqué en rotation autour de l'axe L16.

Lorsque la protubérance coulisse vers le haut suivant le chemin radial 164L pour atteindre le chemin radial 164R par actionnement manuel d'un utilisateur, le pion peut à nouveau tourner autour de l'axe L16 par coulissement de la protubérance 166 dans le chemin radial 164R par actionnement manuel d'un utilisateur, et revient à sa première position de repos.

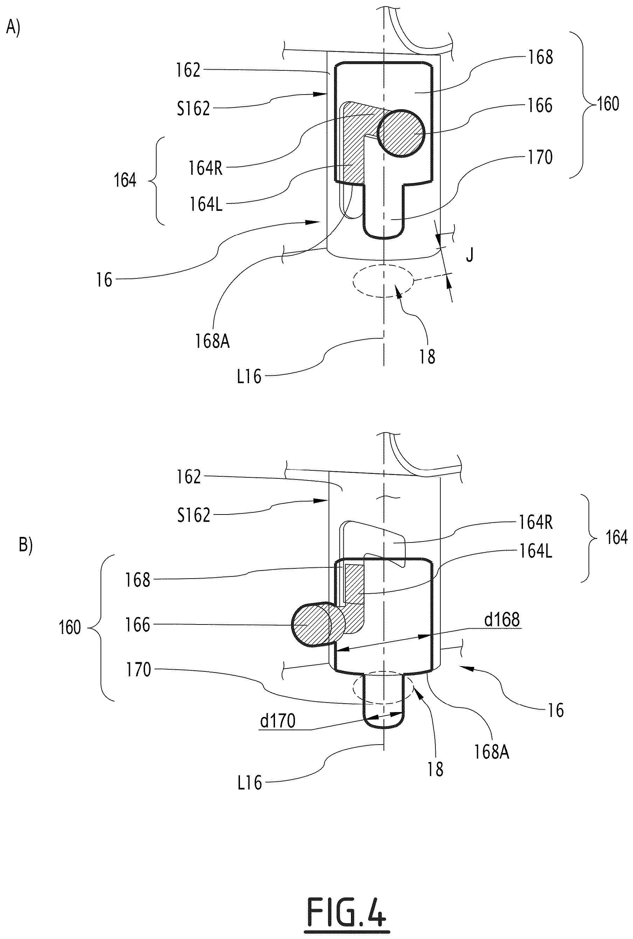

La galerie 8 comporte des encoches 18 représentées sur les figures 1, 3 et 4. Sur les inserts A) et B) de la figure 3, seule une encoche 18 est représentée, en regard du seul pion coulissant 160 représenté. Sur les inserts A) et B) de la figure 4, une encoche 18 est ajoutée, pour une meilleure compréhension de l'invention, même si elle n'appartient pas, à proprement parler au pied 16. La galerie 8 comporte au moins autant d'encoches 18 qu'il n'y a de pions coulissants 160. Une encoche 18 est disposée sur la galerie 8 en regard de chaque pion coulissant 160.

De préférence, chaque encoche est de forme circulaire avec un diamètre supérieur au diamètre d170 du cylindre secondaire 170 du pion coulissant 160 en regard duquel l'encoche est disposée, et inférieur au diamètre d168 du cylindre principal 168.

Dans l'exemple des figures, la galerie 8 comporte deux encoches 18 disposées sur la barre transversale arrière 84A.

Lorsque le pion coulissant 160 coulisse vers le bas selon l'axe L16 par coulissement de la protubérance 166 suivant le chemin longitudinal 164L par actionnement manuel par un utilisateur, l'échelle 10 se verrouille au niveau de la galerie 8 par l'insertion des cylindres secondaires 170 des pions coulissants 160 dans les encoches 18.

Ainsi, lorsque les pions coulissants 160 sont dans leur deuxième position de verrouillage après actionnement manuel des pions coulissants 160 par un utilisateur, l'échelle 10 empêche l'ouverture du battant secondaire 42 de la porte battante arrière 4. Le risque d'une ouverture malencontreuse du battant secondaire 42 sur lequel est disposée l'échelle 10, lorsqu'un utilisateur a pris appui dessus, est donc éliminé. L'utilisation de l'échelle 10 est de ce fait rendue plus sûre.

Lorsque les pions coulissants 160 sont dans leur première position de repos, les cylindres secondaires 170 sont disposés au-dessus des encoches 18 à l'intérieur des parties tubulaires 162 des pions coulissants 160 et les cylindres secondaires 170 ne sont pas engagés dans les encoches 18. Le jeu J est alors défini entre les cylindres secondaires 170 et la surface supérieure de la barre transversale 84A dans laquelle sont ménagées les encoches 18. Ainsi, au repos, l'échelle 10 ne s'oppose pas à l'ouverture du battant secondaire 42 de la porte battante arrière 4.

Lorsque les cylindres secondaires 170 des pions coulissants 160 sont engagés dans les encoches 18, ces encoches 18 bloquent un déplacement en translation de l'échelle 10 parallèlement à la galerie 8, selon les deux axes X2 et Y2 du véhicule 2, ceci dans les deux directions de chacun de ces deux axes. En d'autres termes, les encoches 18 forment des butées de blocage en translation de l'échelle 10 par rapport à la galerie 8, selon les axes X2 et Y2 dans les deux directions de chaque axe.

Le contact vertical entre les pieds 16 des portions supérieures 14 de l'échelle 10 et la galerie 8 permet un blocage en translation de l'échelle 10 selon l'axe L16, vertical ou quasivertical, dans la direction orientée vers le sol. Ainsi, lors de l'utilisation de l'échelle 10, cettedernière est verrouillée verticalement et dans un plan horizontal. L'échelle 10 est donc stabilisée lorsqu'un utilisateur prend appui dessus.

Selon une variante non-représentée de l'invention, les encoches 18 sont des trous traversant une barre de la galerie 8 de part en part.

Selon une variante non-représentée de l'invention, les portions supérieures 14 comportent plusieurs pieds 16.

Selon une variante non-représentée de l'invention, l'échelle 10 est montée sur le battant principal 40 de la porte battante arrière 4. Selon une autre variante non-représentée de l'invention, la porte battante arrière 4 est à un seul battant. Dans tous les cas, l'échelle 10 ne doit pas masquer la plaque d'immatriculation.

Selon une variante non-représentée de l'invention, les pieds 16 ne comportent pas de partie tubulaire 162. Dans ce cas, les pions coulissants 160 sont montés à l'extérieur des pieds 16, ce qui est moins ergonomique que l'exemple des figures, car les pions coulissants 160 sont alors visibles et exposés aux intempéries.

Toute caractéristique décrite ci-dessus pour un mode de réalisation ou une variante est applicable aux autres modes de réalisation et variantes, pour autant que cela est techniquement possible.

## Revendications

1. Véhicule automobile (2) comprenant :
- une porte battante arrière (4) mobile entre une position fermée où elle ferme l'accès à un volume intérieur du véhicule et une position ouverte où elle donne accès au volume intérieur ;
- un toit (6) ;
- une galerie (8) montée sur le toit (6) ;
- une échelle (10) comportant :
∘ deux montants (12), parallèles entre eux et fixés sur la porte battante arrière (4), et
∘ des barreaux (120) reliant entre eux les deux montants (12) ;
**caractérisé en ce que** :
- l'échelle (10) comporte également deux portions supérieures (14) s'étendant, à partir du haut des montants (12), au-dessus d'une partie de la galerie (8) ;
- au moins une des portions supérieures (14) comporte au moins un pied (16) orienté vers le bas, en direction de la galerie (8) ;
- le pied (16) comporte un pion coulissant (160) qui coulisse, selon un axe longitudinal (L16) du pied (16), entre une première position de repos et une deuxième position de verrouillage ;
- la galerie (8) comporte au moins une encoche (18) alignée avec le pion coulissant (160) selon une direction parallèle à la direction de coulissement, lorsque la porte battante arrière est en configuration fermée ;
- lorsque le pion coulissant (160) est dans sa première position de repos et lorsque la porte battante arrière est en configuration fermée, le pion coulissant (160) est décalé de la galerie (8), selon une direction de l'axe longitudinal (L16) ;
- lorsque le pion coulissant (160) est dans sa deuxième position de verrouillage et lorsque la porte battante arrière est en configuration fermée, le pion coulissant est engagé dans l'encoche (18).

2. Véhicule selon la revendication 1, dans lequel le pied (16) comporte en outre une partie tubulaire (162), fixe par rapport à la partie supérieure, et dans lequel le pion coulissant (160) est monté à l'intérieur de la partie tubulaire.

3. Véhicule selon la revendication 2, dans lequel la partie tubulaire (162) comporte une encoche (164) ménagée à travers une surface latérale (S162) et le pion coulissant (160) comporte une protubérance (166) orientée perpendiculairement à l'axe longitudinal (L16) et disposé au travers de l'encoche (164).

4. Véhicule selon la revendication 3, dans lequel la protubérance (166) est configurée pour passer d'une position bloquante à une position passante par le coulissement manuel de la protubérance dans l'encoche (164), et dans lequel la partie coulissante (160) :
- coulisse selon la première direction de l'axe longitudinal (L16) lorsque la protubérance est dans sa position passante, et
- est bloquée en translation selon la première direction de l'axe longitudinal (L16) au niveau de la protubérance, lorsque la protubérance est dans sa position bloquante.

5. Véhicule selon la revendication 4, dans lequel la protubérance (166) passe de sa position bloquante à sa position passante par rotation du pion coulissant (160) autour de l'axe longitudinal (L16).

6. Véhicule selon l'une des revendications précédentes, dans lequel le pion coulissant (160) comprend un cylindre principal (168) et un cylindre secondaire (170), disposé à une extrémité inférieure du cylindre principal, et dans lequel un diamètre (d170) du cylindre secondaire est strictement inférieur à un diamètre (d168) du cylindre principal.

7. Véhicule selon l'une des revendications précédentes, dans lequel chaque portion supérieure (14) de l'échelle (10) comporte au moins un pion, les portions supérieures comportant, de préférence, le même nombre de pions.

8. Véhicule selon l'une des revendications précédentes, dans lequel les deux portions supérieures (14) de l'échelle (10) sont parallèles entre elles et les pions (16) sont parallèles ou quasi-parallèles entre eux.

9. Véhicule selon l'une des revendications précédentes, dans lequel l'échelle (10) est montée sur un battant secondaire (42) de la porte et verrouille ce battant secondaire (42) en position fermée, lorsque la partie coulissante (14) est dans sa deuxième position.

10. Véhicule selon l'une des revendications précédentes, dans lequel la galerie (8) comporte des barres transversales (84) et chaque encoche (18) est disposée sur la barre transversale (84A) la plus proche de l'arrière du véhicule (2).
